# EUROPEAN PATENT APPLICATION

(11) **EP 4 538 539 A1**
(43) Date of publication of application: **16.04.2025**
(21) Application number: 24206074.7
(22) Date of filing: 11.10.2024
(51) Int. Cl.: F04D 29/28, F04D 29/66, F04D 29/30

(54) **MOTOR VEHICLE PROVIDED WITH FUEL CELLS WITH AN IMPROVED SOUND EMISSION**

(30) Priority: 13.10.2023 IT 202300021351
(71) Applicant: FERRARI S.p.A., 41100 Modena (IT)
(72) Inventor: CORRIGAN, Daire, 41100 MODENA (IT); MEDDA, Massimo, 41100 MODENA (IT); HOFFER, Pierre-Alain, 41100 MODENA (IT)
(74) Representative: Studio Torta S.p.A.

(57) **Abstract**

A motor vehicle (1) includes a fuel cell (10) and a supply assembly (11) to supply the fuel cell (10), wherein the supply assembly (11) comprises a centrifugal compressor (4) to compress a reagent and comprising an impeller (35) having in turn a shaft portion (42) extending along an inlet axis (A), a circumferential edge (43) extending ringwise around the inlet axis (A), a connecting portion (44) extending from the shaft portion (42) to the circumferential edge (43), first and second blades (45, 46) projecting from the connecting portion (44), of which each of the second blades (46) is arranged between two corresponding blades (45) to form two respective radial flow channels (47) for the reagent, wherein the first and second blades (45, 46) have respective profiles (50, 51) along respective curvilinear abscissae with shapes equal to each other and located uniformly distributed according to a period or angular step around the inlet axis (A), wherein the profiles (50, 51) of the second blades (46) are shorter than those of the first blades (45).

## Description

### CROSS-REFERENCE TO RELATED APPLICATIONS

This patent application claims priority from Italian patent application no. 102023000021351 filed on October 13, 2023, the entire disclosure of which is incorporated herein by reference.

### TECHNICAL FIELD

The invention relates to a motor vehicle provided with fuel cells, in particular supplied with hydrogen to produce electric power via an electrochemical reaction with oxygen.

### PRIOR ART

Some motor vehicles have a propulsion apparatus based on fuel cells.

A fuel cell is supplied with a fuel, usually hydrogen, that crosses the fuel cell coming in and out via special inlet and outlet openings.

In addition, the fuel cell is traversed by the flow of a reagent, usually oxygen, suitable for causing an electrochemical reaction with the fuel, so that the electrochemical reaction produces a flow of electrons, i.e. an electric current, and a waste substance.

For example, the waste substance consists of water when the fuel and the reagent are, respectively, hydrogen and oxygen.

Like the fuel, the reagent also comes in and out via special inlet and outlet openings.

The fuel cell is typically connected to an electric circuit that includes an electric power accumulator, usually a battery, which can in turn be used to supply an electric motor of the motor vehicle.

In the sector, the use of fuel cells is extremely attractive since it enables generation of electric power sufficient for the electric propulsion of the motor vehicle.

In addition, the electric power is possibly obtained without the production of harmful emissions, for example since the waste substance is water when the fuel and the reagent are, respectively, hydrogen and oxygen.

On the other hand, the absence of a thermal engine ensures that the sounds emitted by using the motor vehicle are generally considered unsatisfactory by the driver.

The grounds for dissatisfaction are basically linked both to a reduced pleasure in driving, and to a reduced awareness of the driver in relation to the operating conditions of the motor vehicle, for example with particular reference to acceleration and the load on the electric motor.

In fact, in vehicles with thermal engines, the driver uses, even only instinctively, the sounds produced by the engine as useful feedback signals for driving; in addition, the driver famously feels a sense of pleasure associated with a sound in line with the operation of the motor vehicle.

This is even more so for sports or luxury motor vehicles, with higher performance.

In addition, the sound produced by the thermal engine is usually used outside the motor vehicle too, for example by the drivers of vehicles or pedestrians nearby, as a sign of the presence of the motor vehicle.

Therefore, there is, generally, a need to improve the sound capacity or, more specifically, the sounds of motor vehicles provided with fuel cells.

In more detail, the same need is even more strongly felt when the motor vehicle does not have a thermal engine.

One purpose of this invention is to satisfy the need described above, preferably in a simple way that can be repeated.

### DESCRIPTION OF THE INVENTION

The purpose is achieved with a motor vehicle as defined in claim 1.

The dependent claims define particular embodiments of the invention.

### BRIEF DESCRIPTION OF THE DRAWINGS

Below, one embodiment of the invention will be described to better understand the same by way of non-limiting example and with reference to the attached drawings, wherein:
- Figure 1 is a perspective view of an impeller of a centrifugal compressor according to the prior art,
- Figure 2 is a perspective view of a motor vehicle according to the invention,
- Figure 3 is a block diagram of an electric power generation assembly of the motor vehicle including a fuel cell and a centrifugal compressor to compress a reagent supplied to the fuel cell,
- Figure 4 is a front view of the centrifugal compressor, i.e. a view across a plane perpendicular to an inlet axis of the compressor,

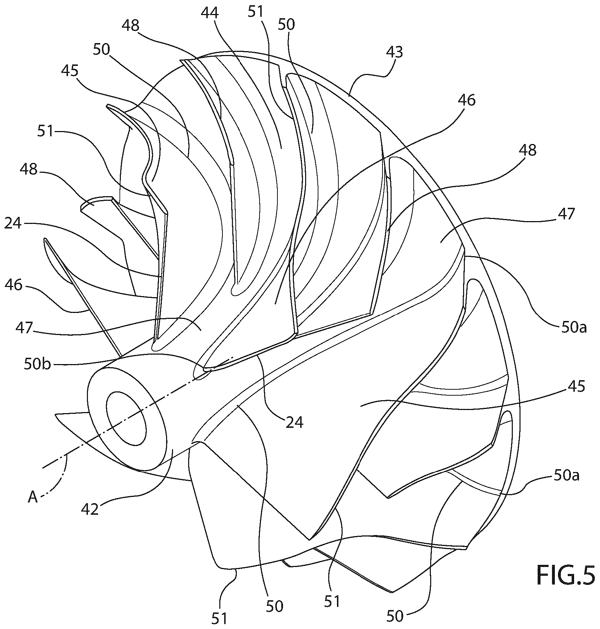

- Figure 5 is a perspective view, on an enlarged scale, of an impeller of the compressor in Figure 4,
- Figure 6 is a perspective view representing a comparison between the impeller in Figure 5 and the known impeller in Figure 1,
- Figure 7 is a front view to show, from the front, the comparison between the impellers in Figure 5 and Figure 1, and
- Figure 8 is a schematic representation of sound reproduction equipment for reproducing a sound produced by the operation of the compressor in Figure 4.

### EMBODIMENTS OF THE INVENTION

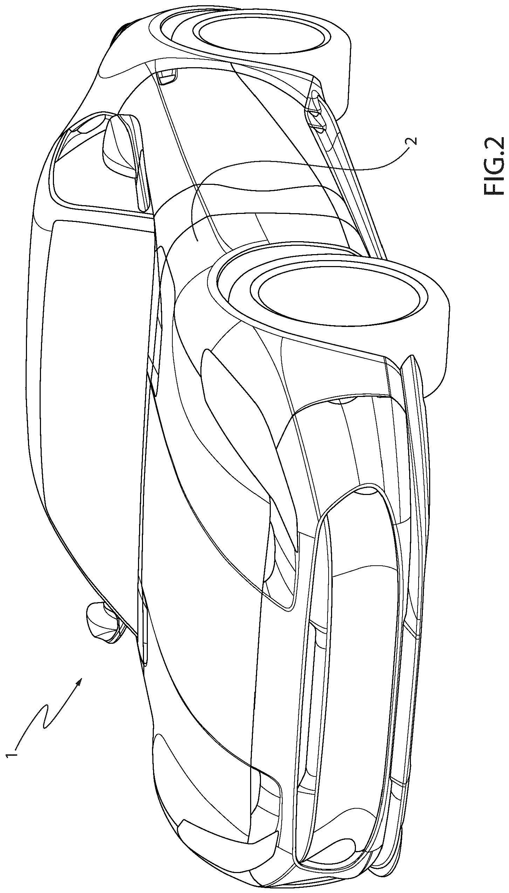

In Figure 2, the reference number 1 is used to indicate, as a whole, a vehicle, specifically a motor vehicle, in particular a sports or race car.

The motor vehicle 1 comprises a body 2 defining an internal passenger compartment or cabin to accommodate at least one driver and, optionally, one or more passengers.

The motor vehicle 1 also comprises at least one fuel cell 10 and a supply assembly 11 configured to supply the fuel cell 10.

The fuel cell 10 comprises, in particular
- a fuel circuit with an inlet point 14 to receive a fuel as input and an outlet point 15 to discharge the unused fuel,
- a reagent circuit comprising an inlet point 18 to receive a suitable reagent as input to react with the fuel generating an electric current and a waste substance, as well as an outlet point 19 to discharge the unused reagent and the waste substance, and

- a coolant circuit comprising an inlet point 22 to receive a cool coolant as input to remove heat and an outlet point 23 to discharge the coolant heated by the heat removed.

In the operation of the fuel cell 10, a part of the fuel circulating in the fuel circuit is used since subject to an electrochemical reaction.

The electrochemical reaction occurs with a part of the reagent circulating in the reagent circuit and through an electrolyte of the fuel cell 10.

The electrochemical reaction entails the splitting of the fuel into positive ions and electrons.

The positive ions cross the electrolyte binding with the reagent, thus forming the waste substance with it.

In addition, the electrolyte prevents the passage of electrons at the same time.

The latter bypass the electrolyte through an electric circuit of the fuel cell 10, thus forming an electric current.

The reagent part that actually reacts with the fuel is used up through the formation of the waste substance.

In detail, the reagent is a compressible fluid, in particular in the gaseous state for environmental temperature and pressure conditions.

The electrolyte could comprise, for example, a proton exchange membrane arranged between the fuel circuit and the reagent circuit so as to enter in contact, at the same time, with the fuel and the reagent at its respective, opposite surfaces.

For example, the fuel comprises or is defined by hydrogen.

In addition, for example, the reagent comprises or is defined by oxygen. The oxygen could simply be part of the air surrounding the motor vehicle 1. Therefore, the reagent could also be considered as comprising or being defined by air, more generally.

In addition, for example, the coolant could comprise or be defined by water.

If the fuel and reagent were, respectively, hydrogen and oxygen or air, the waste substance would comprise or be defined by water, although, in particular, not the same water as the coolant.

In any case, in general, the operation of the fuel cell 10 is known, so it will not be described in further detail.

The supply assembly 11 supplies the fuel cell 10 with the fuel and the reagent. More precisely, the supply assembly 11 supplies the inlet points 14, 18 with the fuel and the reagent respectively.

The reagent will react with the fuel in the fuel cell 10 generating an electric current and, thus, electric power.

The supply assembly 11 comprises a centrifugal compressor 4 configured to compress the reagent.

The compressor 4 retrieves the reagent, in this case, from the environment outside the motor vehicle 1. In particular, the reagent retrieved by the compressor 4, i.e. at least part of the air outside the motor vehicle 1, passes through an air filter 5 to purify the outside air.

Thus, the compressor 4 compresses the reagent and sends it to the fuel cell 10 or, more precisely, to the inlet point 18.

The reagent compressed by the compressor 4 preferably passes through an intercooler 6, which is configured to exchange heat between the compressed reagent and the outside environment, so that the compressed reagent cools down, transferring heat to the outside environment.

More preferably, the motor vehicle 1 comprises a humidifier 7, arranged, in particular, between the intercooler 6 and the fuel cell 10, to humidify the compressed reagent before the latter reaches the fuel cell 10.

For example, the compressed reagent enters the fuel cell 10 or, more precisely, the inlet point 18 via a valve device 8 configured to adjust a flow of reagent towards the fuel cell 10. In particular, the valve device 8 is arranged between the humidifier 7 and the fuel cell 10.

Optionally, the reagent and the waste substance leave the fuel cell 10 or, more precisely, the outlet point 19 via another valve device 9 configured to adjust a discharge flow of reagent from the fuel cell 10.

The reagent and the waste substance can pass through the humidifier 7. In particular, the humidifier 7 is configured to transfer the humidity of the waste substance to the compressed reagent from the compressor 4 and directly towards the fuel cell 10 or, more precisely, towards the inlet point 18.

In addition, the motor vehicle 1 comprises a separation device 25 configured to separate the reagent and waste substance leaving the fuel cell 10. The separation device 25 is preferably arranged downstream of the humidifier 7.

The waste substance separated using the separation device 25 reaches an outlet towards the outside environment.

The supply assembly 11 comprises a turbine 26 configured to receive a flow of reagent leaving or discharged from the fuel cell 10, i.e., in detail, the reagent separated using the separation device 25, and to generate mechanical power by the flow of reagent.

The mechanical power produced by the turbine 26 is used by the compressor 4 to compress the reagent retrieved by that compressor 4. Therefore, the turbine 26 could be coupled to the compressor 4 so as to supply the mechanical power produced to the compressor 4.

Optionally, an electric motor generator unit 27 is placed between the turbine 26 and the compressor 4. The electric motor generator unit 27 is coupled to the turbine 26 and to the compressor 4 to transform the mechanical power produced by the turbine 26 into electric power and to drive the compressor 4 using electric power. Alternatively, the motor generator unit 27 and the turbine 26 may be coupled to the compressor 4 in parallel so as to drive the compressor 4 according to a parallel architecture.

The compressor 4, the motor generator unit 27, and the turbine 26 are, therefore, part of a turbocharger assembly.

The supply assembly 11 also comprises a fuel supply line, in turn comprising a tank 28 to hold the fuel, an injection device 29 configured to inject the fuel into the fuel cell 10, and an optional recirculation device 30 (for example a pump or fan) configured to redirect the fuel leaving the fuel cell 10, since not used by the same, to the tank 28.

The coolant preferably circulates from the outlet point 23 to the inlet point 22 through a cooling line passing through a radiator 31 of the refrigeration line. The radiator 31 is configured to exchange heat between the coolant and the outside environment, so that the coolant cools down, transferring heat to the outside environment. The circulation of the coolant from the outlet point 23 to the inlet point 22 is, preferably, in a closed loop and occurs by means of a pump that is not illustrated.

The motor vehicle 1 also comprises at least one electric power storage device 32, for example a battery, configured to store the electric power generated by the fuel cell 10.

In addition, the motor vehicle 1 comprises an electric motor that is not illustrated but is configured to propel the motor vehicle 1. The electric motor is connected to the device 32 to be supplied with stored electric power.

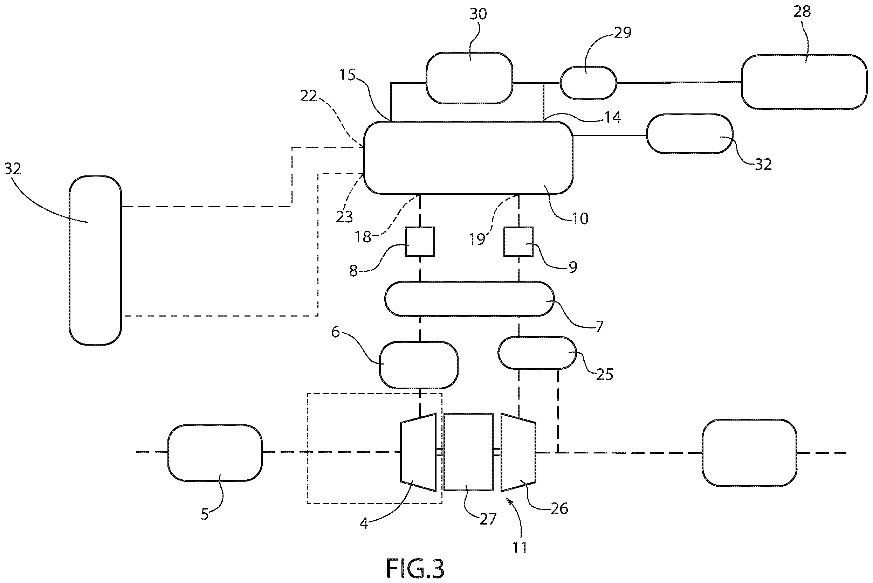

For clarity, any component schematically depicted in Figure 3 may considered independently of the others and as part of the motor vehicle 1.

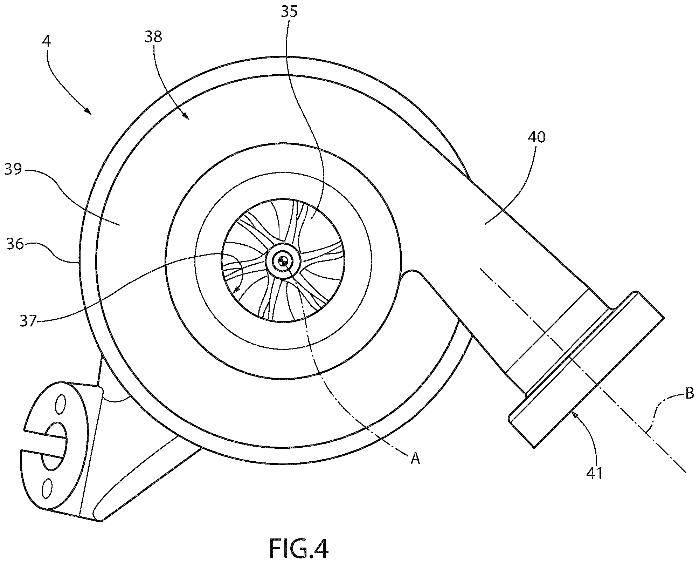

Passing to Figure 4, the compressor 4 comprises an impeller 35.

More specifically, the compressor 4 also comprises an external casing 36 that houses the impeller 35.

The impeller 35 rotates with respect to the casing 36 around an inlet axis A, in detail, a straight one.

The casing 36 has an inlet opening 37 at the axis A; in particular, the inlet opening is defined by a through hole of the casing 36 along the axis A.

The reagent enters the compressor 4 via the opening 37, thus reaching the impeller 35.

In addition, the casing 36 defines a stator channel 38 inside with at least one portion 39 that extends substantially in a circumferential direction around the axis A, as well as around the impeller 35 in a position radially more external than the impeller 35, and a portion 40 extending tangentially from the portion 39 along a tangential axis B and terminating with the outlet opening 41, in particular defined by a through hole of the casing 36 along the axis B.

The rotation of the impeller 35 around the axis A radially pushes the reagent axially entering through the inlet opening 37, thus increasing its kinetic energy.

The reagent is thus compressed crossing the stator channel 38 until it goes out through the outlet opening 41. Therefore, the stator channel 38 has a shape configured to convert the kinetic energy of the reagent into an increase in pressure of the reagent.

The impeller 35 comprises a shaft portion 42 extending along the axis A and a circumferential edge 43 extending ringwise, in particular circular, around the axis A (in detail, across a plane orthogonal to the axis A).

In addition, the impeller 35 comprises a connecting portion 44 extending from the shaft portion 42 to the circumferential edge 43.

More specifically, both the shaft portion 42 and the connecting portion 44 are axially symmetrical to the axis A and coaxial to each other.

In particular, along the axis A, the shaft portion 42 maintains a constant radial extension (i.e., a radius) with respect to the axis A, while the connecting portion 44 has a radial extension that steadily grows, more specifically gradually, starting from the shaft portion 42 until it meets the circumferential edge 43, thus radially connecting the shaft portion 42 with the circumferential edge 43.

Therefore, the connecting portion 44 is substantially radial, i.e. it has a radial extension that goes from the lateral, external surface of the shaft portion 42 to the circumferential edge 43.

The connecting portion 44 preferably forms a single piece with the shaft portion 42 and the circumferential edge 43. More generally, the whole impeller 35 is preferably made of a single piece.

The impeller 35 also comprises first blades 45 and second 46 blades that project from the connecting portion 44. Each of the blades 46 is arranged between two corresponding blades 45, in particular angularly arranged around the axis A between the two corresponding blades 45 so as to form two respective radial flow channels 47 for the reagent.

In practice, the rotation of the impeller 35 around the axis A pushes the reagent to radially flow, i.e. in a centrifugal manner, along the channels 47. Thus, each of the channels 47 delimited by one of the blades 46 and one of the other blades 45 defines a centrifugal path, i.e. with at least one radial component, for the reagent axially entering along the axis A.

Optionally, the impeller 35 comprises splitter baffles 48, each of which is protruding from the connecting portion 44 and is arranged to further divide in two a portion (or, better, only a portion) of a corresponding one of the channels 47.

In particular, the impeller 35 comprises a splitter baffle 48 for each of the channels 47.

The splitter baffles 48 preferably extend only to the connecting portion 44, no further than to meet the circumferential edge 43.

In addition, the splitter baffles 48 preferably extend to the circumferential edge 43, i.e. they terminate at the circumferential edge 43.

The splitter baffles 48 extend along the radial path defined by the channels 47, in particular along a terminal section of the radial path, considering that the radial path starts with an end closer to the shaft portion 42 than to the circumferential edge 43 and terminates with an end closer to the circumferential edge 43 than to the shaft portion 42.

The sub-portions divided by each of the splitter baffles 48 are adjacent to each other along a circumferential direction with respect to the axis A.

In practice, each of the splitter baffles 48 is arranged in the middle of the corresponding channel 47, thus dividing the channel 47 in half, with the adjacent halves along the circumferential direction.

The splitter baffles 48 should not be confused with the blades 45, 46, since they have a shape, arrangement, extension, and function that are different to the blades 45, 46. In particular, the splitter baffles 48 are known components for increasing the compression ratio of the compressor 4 and for avoiding the so-called "choked flow" phenomenon at the leading edges of the main blades, here defined by the blades 45, 46.

For example, the splitter baffles 48 have an axial extension (along the axis A), in particular starting from the circumferential edge 43, less than or equal to half, or more generally three quarters, of the axial extension of the impeller 35. On the other hand, the main blades, here defined by the blades 45, 46, have an axial extension (along the axis A), in particular starting from the circumferential edge 43, greater than half, or more generally three quarters, of the axial extension of the impeller 35.

The blades 45, 46 have respective bases 50 that extend at least to the connecting portion 44, although they may also extend to the shaft portion 42.

The blades 45, 46 extend starting from the bases 50 with a configuration overhanging the connecting portion 44 and, potentially, the shaft portion 42 until they terminate with free ends 51 opposite the bases 50.

The bases 50 extend along respective directions or curvilinear abscissae that have the same shape. This means that there is at least one rigid rotational-translation that enables the perfect overlapping of two, separate bases 50. In other words, the curvilinear abscissae are, ideally, able to be overlapped, even if positioned separately on the impeller 35.

More specifically, the curvilinear abscissae are not unlimited, but extend between two opposite ends, thus defining respective curvilinear segments.

The bases 50 or the corresponding curvilinear abscissae are located on the impeller 35 uniformly distributed according to at least one angular period around the axis A. This means that the curvilinear abscissae have corresponding points (for example, even just one point for each curvilinear abscissae) distributed around the axis A, for example along a circular direction on a plane perpendicular to the axis A, according to said angular period. The points are all, in particular, positioned in the same position with the identical shape of the corresponding curvilinear abscissae. In other words, the points all have the same coordinate along the corresponding curvilinear abscissae. For example, the points coincide with ends of the curvilinear abscissae, in particular those closer to the circumferential edge 43 than to the shaft portion 42.

In the embodiment illustrated, the points are right on the circumferential edge 43, which extends between the other things on the plane perpendicular to the axis A in a circular way.

The angular period can also be defined as a step or angular step of the blades from the blades 45, 46, here defining, in detail or in particular, the main blades of the impeller 35.

The bases 50 of the blades 45 have respective first lengths (clearly along or according to the corresponding curvilinear abscissae) that are equal. Similarly, the bases 50 of the blades 46 have respective second lengths (again along or according to the corresponding curvilinear abscissae) that are equal.

The second lengths are shorter or smaller than the first lengths.

In particular, the bases 50 with the first lengths occupy the whole extension of the corresponding curvilinear segments or curvilinear abscissae. Therefore, the bases 50 with the second lengths are basically a little shorter than those with the first lengths, though extending along curvilinear segments or curvilinear abscissae equal to those along which the other bases 50 extend.

In any case, all the bases 50 preferably have corresponding ends 50b at the shaft portion 42.

In addition, all the bases 50 preferably extend starting from the circumferential edge 43, i.e. they have ends 50a at the circumferential edge 43.

Similarly to the bases 50, the free ends 51 extend along respective curvilinear abscissae that have the same shapes. Similarly, again, to the bases 50, the lengths of the free ends 51 of the blades 46 are shorter than the lengths of the free ends 51 of the blades 45.

More generally, the bases 50 or the free ends 51 may, more generally, be considered as specific profiles of the blades 45, 46 where the expression "profiles" is not necessarily limited specifically to the bases 50 or the free ends 51, which are, in particular, the two opposite, end profiles of the blades 45, 46, but covers, for example, intermediate cross-section profiles of the blades 45, 46, like, for example, the middle profiles of the blades 45, 46 between the two end profiles.

The blades 45 are all the same, like the other blades 46, although distributed on the impeller 35 with separate positions.

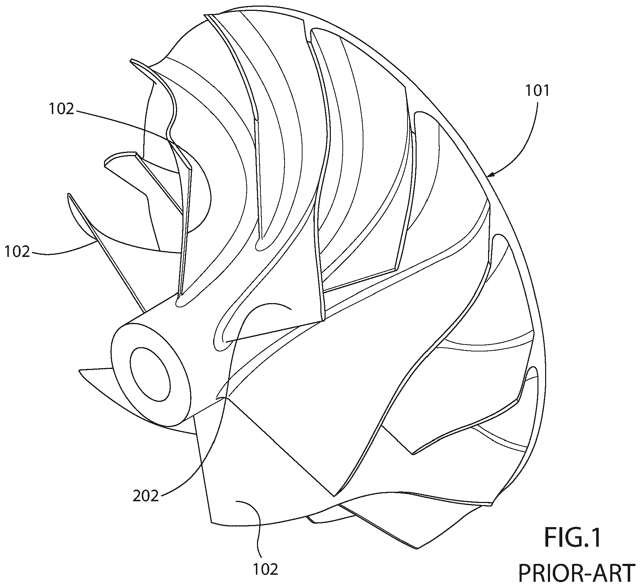

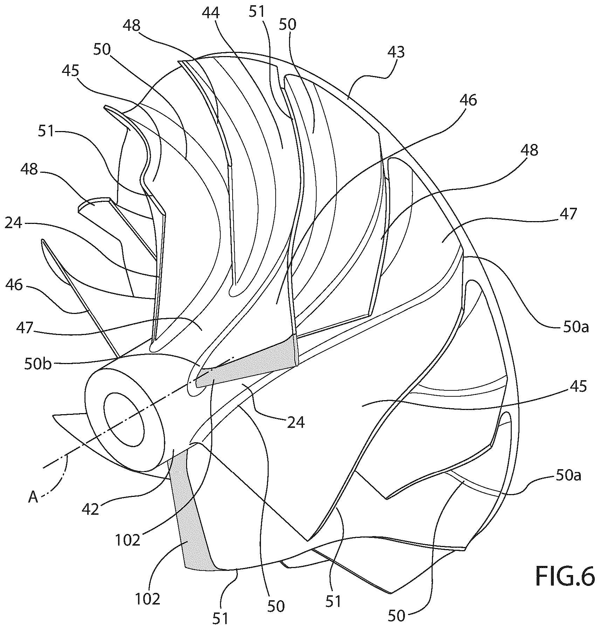

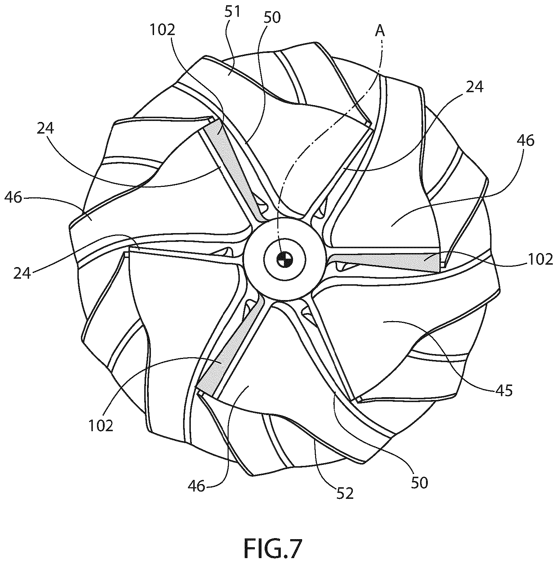

The slight difference between the blades 45 and the other blades 46 is clearly visible in the comparison of Figures 6 and 7, where the impeller 35 is compared with an impeller 101 according to the prior art illustrated in Figure 1. In Figures 6, 7, the difference between the impellers 35, 101 is highlighted in grey. This shows how the impeller 101 has main blades 102 that are all the same.

In Figure 7, the leading edges 24 of the blades 45, 46, as well as those of the blades 102 are projected onto the plane perpendicular to the axis A.

Conveniently, the leading edges 24 of the blades 45, 46 form corresponding angles of attack or angles of incidence with the shaft portion 42 (or with the connecting portion 44 according to embodiments not illustrated) that are substantially the same. Here, the term "substantially" means that the leading angles or pitches may differ within a range of -15° to 15°, more preferably -10° to 10°.

The projections of the leading edges 24 on the plane perpendicular to the axis A are preferably radial or extend radially with respect to the axis A, as can be seen in Figure 7.

With the configuration of the impeller 101, i.e. with six blades 102 that are all the same, the periodicity of the impeller 101 is six.

In general, the periodicity of an impeller of a generic centrifugal compressor influences the sound produced by the same generic centrifugal compressor in use.

More specifically, the sound will have a fundamental frequency proportional to the angular rotation speed of the impeller according to a factor of proportionality equal to the periodicity of the impeller. The more significant frequencies of sound will generally be multiples of the fundamental frequency.

Thus, the presence of the blades 45, 46 that are different according to the length of the bases 50 ensures that the periodicity of the impeller 35 is halved, is specifically 3, with respect to that of the impeller 101.

Therefore, the sound spectrum of the compressor 4 will be enriched with respect to a known compressor, in particular with multiples of the half of the fundamental frequency.

With this enrichment, the sound spectrum will have more significant frequencies or, better, double the significant frequencies, in particular equal to the number of significant frequencies of a thermal engine.

On the other hand, the natural frequencies of the sound produced by the operation of the compressor 4 will remain much higher than those of a sound produced by a thermal engine.

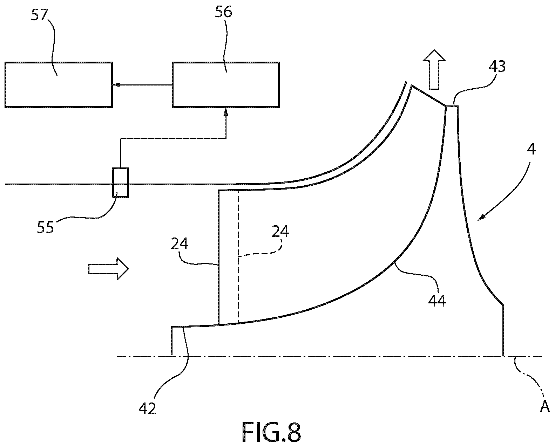

Therefore, the motor vehicle 1 advantageously comprises (Figure 8) a sensor 55 configured to pick up a sound produced by the operation of the compressor 4 and to generate a sound signal containing at least information on the frequencies of the sound produced.

The sensor 55 could be coupled to the compressor 4; in particular, the sensor 55 is fixed to the casing 36.

The sensor 55 can be arranged at the inlet opening 37.

For example, the sensor 55 is configured to measure the pressure of sound waves or a quantity indicating the same pressure. Therefore, the sound signal could indicate pressure; the frequencies of the sound signal will substantially be the same as those of the sound produced by the compressor 4.

In detail, the sensor 55 could be a microphone.

In addition, the motor vehicle 1 comprises a processing device 56, for example a control unit comprising, in particular, an electronic calculating unit. The processing device 56 is configured to process the sound signal by transposing its frequencies downward.

In other words, the processing device 56 extracts the information on the frequencies, transposes the frequencies downwards, and generates a new sound signal to replace the previous one, i.e., it updates the sound signal introducing information on the transposed frequencies to the new signal or the updated signal. Therefore, the updated signal carries or contains the information on the frequencies transposed.

In practice, the processing device 56 conditions the sound signal applying a pitch-shift technique to the sound signal, thus producing an updated or conditioned sound signal.

In particular, the transposition of the frequencies occurs with a constant transposition gain. For example, each of the frequencies is transposed by at least three octaves lower, preferably up to a maximum of four octaves lower.

The updated sound signal is preferably also amplified, with respect to the original sound signal, by the processing device 56.

In more detail, the amplification of the sound signal comprises an increase in the amplitudes of the sound signal associated with the transposed frequencies.

In addition, the motor vehicle 1 comprises a speaker device 57 configured to receive the updated or processed sound signal from the processing device 56 and to reproduce a transposed sound corresponding to the signal received.

Therefore, the transposed sound will have the transposed frequencies. In addition, if the original sound signal is amplified, the transposed sound reproduced by the speaker device 57 will be amplified, i.e. with greater amplitudes, i.e. with a greater volume or intensity, with respect to the sound originally produced by the operation of the compressor 4.

The speaker device 57 is preferably configured to reproduce the transposed sound inside the motor vehicle 1 passenger compartment.

From the above, the advantages of the motor vehicle 1 are clear.

Although the motor vehicle 1 does not have a thermal or internal combustion engine, the sound of the latter is, in any case, similarly obtained from the supply assembly 11, i.e. from the compressor 4.

The compressor 4 is, in any case, an important component of the supply assembly 11, so that the sounds of the fossil fuel vehicle are obtained without including additional machines, beyond those already necessary for the overall operation of the fuel cell 10 and, therefore, of the motor vehicle 1.

In addition, the technical field of fuel cells is an extremely attractive opportunity due to its substantially non-existent environmental impact and high efficiency.

Finally, it is clear that changes may be made to the motor vehicle 1 according to the invention, and variations produced thereto, that, in any case, do not depart from the scope of protection defined by the claims.

In particular, each of the details schematically represented in the figures is independent of the other details and is, specifically, devised to resolve specific technical problems in isolation with respect to the other details.

In addition, the number or shape of each of the components illustrated could be different to what is described and shown in the figures.

## Claims

1. A motor vehicle (1) comprising at least one fuel cell (10) and a supply assembly (11) configured to supply the fuel cell (10) with a fuel and a compressible reagent for reacting with the fuel in the fuel cell (10) with generation of electric power,
wherein the supply assembly (11) comprises a centrifugal compressor (4) configured to compress the reagent and comprising an impeller (35) having in turn
- a shaft portion (42) extending along an inlet axis (A),
- a circumferential edge (43) extending ringwise around the inlet axis (A),
- a connecting portion (44) extending from the shaft portion (42) to the circumferential edge (43),
- first and second blades (45, 46) projecting from the connecting portion (44), of which each of the second blades (46) is arranged between two corresponding first blades (45) to form two respective radial flow channels (47) for the reagent, and
- optional splitter baffles (48), each of which is protruding from the connecting portion (44) and arranged to further divide a portion of a corresponding one of the radial flow channels (47) in two parts,
the first and second blades (45, 46) having respective profiles (50, 51) along respective curvilinear abscissae with shapes equal to each other and located uniformly distributed according to a period or angular step around the inlet axis (A),
wherein the profiles (50, 51) of the first blades (45) and second blades (46) have first lengths equal to each other and second lengths equal to each other, respectively,
**characterized in that** the second lengths are smaller than the first lengths.

2. The motor vehicle according to claim 1, wherein the profiles (50, 51) are respectively defined by bases (50) extending at least at the connecting portion (44) and/or by free ends (51) opposite the bases (50).

3. The motor vehicle according to claim 1 or 2, wherein the profiles (50, 51) all extend from the circumferential edge (43) along the respective curvilinear abscissae.

4. The motor vehicle according to any one of the preceding claims, wherein the profiles (50, 51) have respective ends (50b) at the shaft portion (42).

5. The motor vehicle according to any one of the preceding claims, wherein the first and second blades (45, 46) have respective leading edges (24) respectively forming with the shaft portion (42) or with the connecting portion (44) substantially equal angles of attack with each other.

6. The motor vehicle according to any of the preceding claims, further comprising
- a sensor (55) configured to pick up a sound produced by an operation of the centrifugal compressor (4) and to generate a sound signal containing information about the frequencies of said sound,
- a processing device (56) configured to process the sound signal by transposing its frequencies downward, and
- a speaker device (57) configured to receive the sound signal processed by the processing device (56) and to reproduce a transposed sound corresponding to the sound signal processed by the processing device (56).

7. The motor vehicle according to claim 6, wherein the processing device (56) is configured to transpose the frequencies of the sound signal with a constant transposition gain.

8. The motor vehicle according to claim 6 or 7, wherein the processing device (56) is configured to transpose the frequencies of the sound signal at least three octaves down, preferably up to a maximum of four octaves down.

9. The motor vehicle according to any one of claims 6 to 8, wherein the processing device (56) is configured to amplify the sound signal so that the transposed sound reproduced by the speaker device (57) is amplified relative to the sound produced by the operation of the centrifugal compressor (4).

10. The motor vehicle according to any one of claims 6 to 9, wherein the speaker device (57) is configured to reproduce the transposed sound within a passenger compartment of the motor vehicle.
